Europäisches Patentamt

European Patent Office

Office européen des brevets

(11) Veröffentlichungsnummer: **0 391 065**
**A2**

## (12) EUROPÄISCHE PATENTANMELDUNG

(21) Anmeldenummer: **90103953.7**

(22) Anmeldetag: **01.03.90**

(51) Int. Cl.5: **B60R 16/02**

(30) Priorität: **06.04.89 DE 3911085**

(43) Veröffentlichungstag der Anmeldung:
**10.10.90 Patentblatt 90/41**

(84) Benannte Vertragsstaaten:
**DE FR GB SE**

(71) Anmelder: **ROBERT BOSCH GMBH**
**Postfach 10 60 50**
**D-7000 Stuttgart 10(DE)**

(72) Erfinder: **Schmidt, Wolfgang**
**Erlenweg 5**
**D-7143 Vaihingen/Enz(DE)**

(54) Schaltanordnung zur Erhöhung einer Versorgungsspannung.

(57) Die Erfindung betrifft eine Schaltungsanordnung zur Erhöhung der Versorgungsspannung für während der Anlaßphase oder Betriebsphase einer Brennkraftmaschine eines Kraftfahrzeuges oder dergleichen zu betreibende Geräte, insbesondere Steuergeräte für Zünd- und/oder Einspritzanlagen, mit einer zwischen der Versorgungsspannung und der Batteriespannung liegenden Verpolschutzdiode. Sie schlägt für einen einfachen, kostengünstigen und platzsparenden Aufbau vor, daß ein steuerbares Schaltglied (27) zwischen einer Induktivität, die auch als Zündspule (22) des Kraftfahrzeuges dient, und der Versorgungsspannung ($U_V$) angeordnet ist und daß ein gleichfalls auch der Erzeugung von Zündfunken dienender Unterbrecher (19) zeitversetzt zum Schaltglied (27) derart angesteuert wird, daß die Zündspule einen Untererregungszustand annimmt.

Fig.1

EP 0 391 065 A2

## Schaltanordnung zur Erhöhung einer Versorgungsspannung

Stand der Technik

Die Erfindung betrifft eine Schaltungsanordnung zur Erhöhung der Versorgungsspannung für während der Anlaß- oder Betriebsphase einer Brennkraftmaschine eines Fahrzeuges oder dergleichen zu betreibende Geräte nach der Gattung des Hauptanspruchs.

Bei dem Start einer Brennkraftmaschine tritt insbesondere bei Kälte das Problem auf, daß der Startvorgang aufgrund der in ihrer Kapazität entsprechend herabgesetzten Batterie erschwert ist. Es tritt dann relativ schnell die Situation ein, daß die erschöpfte Batterie keine weiteren Startversuche mehr zuläßt. Voraussetzung für den Start der Brennkraftmaschine ist der Betrieb von bestimmten elektrischen Geräten, insbesondere einem Steuergerät, das für den Betrieb der Zünd- und/oder Einspritzanlage erforderlich ist. Wesentlich ist, daß ein derartiges elektronisches Steuergerät während der Andrehphase der Andrehvorrichtung ausreichend mit Spannung versorgt wird. Dieses gilt insbesondere auch für den im Steuergerät enthaltenen Rechner, der die einzelnen Funktionen überwacht und steuert. Bei schwacher Batterie ist damit zu rechnen, daß während der Andrehphase die Batteriespannung z.B. bis auf etwa 5V abfällt. Bei einer an die Batterie angeschlossenen Verpolschutzdiode, die zur Versorgungsspannungsebene für das genannte Steuergerät führt, tritt überdies noch ein entsprechender Spannungsabfall auf, der noch dadurch vergrößert wird, wenn der Verpolschutzdiode eine Spannungsstabilisierungs-Schaltung nachgeschaltet ist. Der Rechner kann dann seine Aufgaben nicht ordnungsgemäß erfüllen. In diesem Falle wird er den Endstufen des Steuergerätes keine Anweisung zum Zünden erteilen; die der Batterie für den Andrehvorgang entnommene Energiemenge bleibt dann ungenutzt und führt zu einer entsprechenden Erniedrigung der Restenergie.

Aus der Kraftfahrzeugelektrik sind zwar Spannungsregler mit niedriger Low-Drop-Spannung bekannt, jedoch führt ihr Einsatz bei dem hier in Rede stehenden Problem nicht zu einem befriedigenden Ergebnis. Ferner sind induktive Aufwärts-Spannungsregler bekannt, die jedoch einen relativ umfangreichen und daher kostspieligen Schaltungsaufbau erfordern und überdies einen relativ großen Platzbedarf einnehmen. Gerade beim Einsatz in Kraftfahrzeugbereich ist jedoch ein gedrängter, platzsparender Aufbau eine Notwendigkeit, um die Vielzahl der Aggregate im Motorraum unterbringen zu können.

Vorteil der Erfindung

Die erfindungsgemäße Schaltungsanordnung zur Erhöhung der Versorgungsspannung, die nach der Art eines induktiven Aufwärts-Schaltreglers arbeitet, hat mit den im Hauptanspruch genannten Merkmalen demgegenüber den Vorteil, daß bei geringem Schaltungsaufwand und Platzbedarf dennoch zuverlässig während der Anlaßphase eine Erhöhung der Versorgungsspannung für einen sicheren Betrieb des elektronischen Steuergerätes erfolgt. Dieses wird dadurch erreicht, daß die ohnehin vorhandene Zündspule des Kraftfahrzeuges eine Doppelfunktion übernimmt. Einerseits steht sie als von einem steuerbaren Schaltglied geschaltete Induktivität zur Versorgungsspannungserhöhung zur Verfügung und andererseits dient sie ihrer eigentlichen Aufgabe, nämlich der Erzeugung der entsprechend hohen Zündspannung. Diese Doppelfunktion erfordert demgemäß keine zusätzliche Induktivität innerhalb der als Aufwärts-Schaltregler arbeitenden erfindungsgemäßen Schaltungsanordnung, so daß eine Bauelement-Ersparnis vorliegt und überdies ein entsprechend geringerer Raum benötigt wird. Die Anordnung ist so ausgebildet, daß mit dem der Erzeugung der Zündfunken dienenden Unterbrecher zeitlich versetzt auch das Schaltglied angesteuert wird, so daß die durch den Unterbrecher-Schaltvorgang in der Zündspule gespeicherte Energie -im Sinne eines Freilaufkreises - der Versorgungsspannungsebene zugeführt wird. Dadurch stellt sich eine entsprechende Erhöhung der Versorgungsspannung ein. Der Betrieb des elektronischen Steuergerätes ist somit auch bei relativ schwacher Batterie sichergestellt. Um während der Spannungserhöhungsphase die Erzeugung von Zündfunken zu verhindern, wird die Zündspule in einem Untererregungszustand betrieben, so daß zwar eine Energielieferung zur Versorgungsspannungsebene erfolgen kann, jedoch aus energetischen Gründen noch keine Zündfunken auftreten können. Der Unterbrecher übernimmt demgemäß ebenfalls eine Doppelfunktion, indem er den Spannungserhöhungsvorgang steuert und überdies auch seine bekannte Aufgabe der Zündfunkenerzeugung übernimmt.

Vorteilhaft ist es, wenn die Primärwicklung der Zündspule mit ihrem einen Ende an einem Pol der Batteriespannung und mit ihrem anderen Ende an einem am Unterbrecher angeschlossenen Verbindungspunkt liegt und daß das Schaltglied zwischen dem Verbindungspunkt und der Versorgungsspannung angeordnet ist.

Damit der Spannungsripple der Versorgungsspannung während der Spannungserhöhungsphase möglichst klein bleibt, liegt in Reihe zum Schaltglied ein Widerstand und/oder eine Induktivität.

Für die Ansteuerung des Schaltgliedes und auch des Unterbrechers in der Phase vor dem eigentlichen Zündvorgang ist - nach einer bevorzugten Ausführungsform der Erfindung - ein Oszillator vorgesehen. Dieser ist vorzugsweise als Rechteckspannungsoszillator ausgebildet.

Um während der dem eigentlichen Zündvorgang vorgelagerten Spannungserhöhungsphase den Untererregungszustand der Zündspule herbeizuführen, ist die Taktfrequenz des Oszillators derart hoch gewählt, daß die Nenn-Erregung der Zündspule nicht erreicht wird. Durch die hohe Oszillatorfrequenz wird der Spannungsripple auf $U_V$ gering; weitere Filtermaßnahmen erübrigen sich.

Vorzugsweise ist die Anordnung so ausgebildet, daß der Ausgang des Oszillators zu einer Ansteuerschaltung des Schaltgliedes und zu einem ersten Eingang eines ODER-Gliedes führt, dessen anderer, zweiter Eingang mit dem Steuergerät bzw. Rechner verbunden ist und dessen Ausgang den Unterbrecher ansteuert. Während der Spannungserhöhungsphase können somit durch den Oszillator Schaltglied und Unterbrecher geschaltet werden. Sofern eine hinreichend hohe Versorgungsspannung zur Verfügung steht bzw. durch die Spannungserhöhungsphase zur Verfügung gestellt ist, kann durch den Rechner das Schalten des Unterbrechers für den eigentlichen mit Zündvorgang erfolgenden Startvorgang der Brennkraftmaschine vorgenommen werden. Dies erfolgt durch Ansteuerung des zweiten Eingangs des ODER-Gliedes. Durch eine entsprechende Elektronik ist dabei sicherzustellen, daß während der Ansteuerung des zweiten Einganges die Ansteuerung des ersten Einganges des ODER-Gliedes unterbleibt. Hierfür ist eine Verbindung zwischen Rechner und Oszillator vorgesehen, über die der Oszillator ein- bzw. ausgeschaltet werden kann.

Die Wahl der Ansteuerung des Unterbrechers durch das Steuergerät oder den Oszillator wird von einer span nungsabhängigen Logik-Schaltung vorgenommen. Erkennt die Logik-Schaltung, daß die Versorgungsspannung für einen Zündvorgang zu niedrig ist, so übernimmt der Oszillator die Ansteuerung des Unterbrechers. Liegt dagegen eine hinreichende Höhe der Versorgungsspannung vor, so steuert das Steuergerät den Unterbrecher zur Erzeugung der Zündfunken an.

Um die Erhöhung der Versorgungsspannung zu begrenzen, ist vorzugsweise ein Überspannungsableiter vorgesehen. Dieser kann als Zenerdiode ausgebildet sein.

Eine Pufferung der Versorgungsspannung ist mittels eines Ladekondensators möglich.

Der Rechner des Steuergerätes erhält über einen Analog/Digital-Konverter Informationen im Hinblick auf die Höhe der jeweils anliegenden Versorgungsspannung.

Vorzugsweise ist vorgesehen, daß während der Spannungserhöhungsphase Schaltglied und Unterbrecher jeweils zueinander entgegengesetzt in ihren leitenden bzw. sperrenden Zustand geschaltet werden. Wird der Unterbrecher geöffnet und gleichzeitig das Schaltglied in seinen leitenden Zustand versetzt, so wird der von der Primärwicklung getriebene Strom zur Versorgungsspannungsebene geleitet. Die durch Öffnen des Unterbrechers auftretende Spannungserhöhung wird demgemäß der Versorgungsspannungsebene zugeleitet, so daß diese angehoben wird.

Nach einer Weiterbildung der Erfindung ist es jedoch auch möglich, daß das Schaltglied während der Spannungserhöhungsphase seinen leitenden Zustand annimmt.

Sofern es sich bei dem Schaltglied um ein Thyristor handelt, so liegt dieser mit seiner Kathode an der Versorgungsspannungsebene und mit seiner Anode an dem Verbindungspunkt. Das Gate des Thyristors wird während der Spannungserhöhungsphase derart angesteuert, daß der Thyristor leitet, sofern an Anode und Kathode die dafür erforderlichen Potentiale anliegen. Wird nun der Unterbrecher geöffnet, so daß eine Spannungserhöhung an der Primärwicklung der Zündspule auftritt, so wird die Anode des Thyristors gegenüber der Kathode im Potential angehoben, so daß die Spannungserhöhung auf die Versorgungsspannungsebene übertragen wird. Während also der Unterbrecher laufend ein- und ausgeschaltet wird, befindet sich das Schaltglied im leitenden Zustand. Letzteres hat auch zur Folge, daß das Auftreten von Zündfunken unterbleibt.

Sofern auch während des Zündbetriebes der Zündspule innerhalb der Öffnungszeiten des Unterbrechers eine Versorgungsspannungserhöhung erfolgen soll, müssen Unterbrecher und Schaltglied mindestens einmal in dem betreffenden Zeitraum angesteuert werden. Somit läßt sich auch während des Zündbetriebes - wenn der Rechner also bereits arbeitet - eine Energiezuführung zur Versorgungsspannungsebene vornehmen. Hierbei ist sicherzustellen, daß die Zündspule derart bemessen und die Zündeinstellung so vorgenommen ist, daß auch bei niedriger Batteriespannung und niedriger Drehzahl unter Berücksichtigung eines entsprechenden Schließwinkels eine hinreichende Energie von der Zündspule zur Verfügung gestellt und der Versorgungsspannung zugeführt werden kann.

Vorzugsweise ist vorgesehen, daß das Schaltglied ein Thyristor ist. Bevorzugt kann jedoch auch ein elektronischer Schalter mit optischer Triggerung eingesetzt werden. Der Unterbrecher ist insbesondere als Transistor T1 ausgebildet.

Nach einer Weiterbildung der Erfindung ist der Oszillator zur Versorgung an die Versorgungsspannung angeschlossen. Diese Maßnahme hat den Vorteil, daß dem Oszillator eine relativ hohe Spannung zur Verfügung gestellt wird. Dieses wäre nicht der Fall, wenn man ihn an dieselbe stabilisierte Spannung anschließen würde, die auch den Rechner versorgt. Mithin ist auch unter besonders ungünstigen Umständen davon auszugehen, daß die am Oszillator anliegende Spannung für seinen Betrieb ausreicht. Das Anschwingen des Oszillators ermöglicht dann die erfindungsgemäße Spannungserhöhung, so daß -durch die Spannungserhöhungnachfolgend auch der Rechner in Betrieb genommen werden kann. Der Oszillator schwingt somit unabhängig vom Rechner an, wird vorzugsweise jedoch von ihm -nach Durchführung der Spannungserhöhungsphase- ausgeschaltet.

Besonders günstig ist es, wenn der Oszillator in CMOS-Technologie ausgeführt ist; dieses hat eine entsprechend geringe Energieaufnahme zur Folge.

Schließlich kann die Anordnung derart ausgebildet sein, daß der Oszillator bei einer Versorgungsspannung anschwingt, die kleiner ist als die Mindestspannung für den Betrieb des Rechners. Auf diesen Umstand wurde bereits schon eingegangen. Er hat zum Vorteil, daß bei Spannungen, die nicht für einen Rech nerbetrieb ausreichen, dennoch gestartet werden kann, da durch den Betrieb des Oszillators zunächst eine Spannungserhöhung vorgenommen wird, so daß ein Rechnerbetrieb möglich ist. Ist dieser Zustand erreicht, so kann die Anlaßphase der Brennkraftmaschine durchgeführt werden.

Zeichnung

Die Erfindung wird im folgenden anhand der Figuren näher erläutert. Es zeigen:

Figur 1 eine Prinzipschaltung der erfindungsgemäßen Schaltungsanordnung,

Figur 2a ein Diagramm des zeitlichen Verlaufs einer Versorgungsspannung,

Figur 2b ein Diagramm einer zeitlich der Figur 2a zugeordneten Oszillatorspannung,

Figur 2c ein zeitlich den Figuren 2a und 2b zugeordnetes Diagramm, das den Betriebszustand eines Rechners angibt,

Figur 3a ein Diagramm der Oszillatorspannung für eine zwischen den Zündfunken erfolgende Spannungserhöhung und

Figur 3b ein zeitlich der Figur 3a zugeordnetes Diagramm des durch die Zündspule der Schaltungsanordnung fließenden Stromes.

Beschreibung des Ausführungsbeispiels

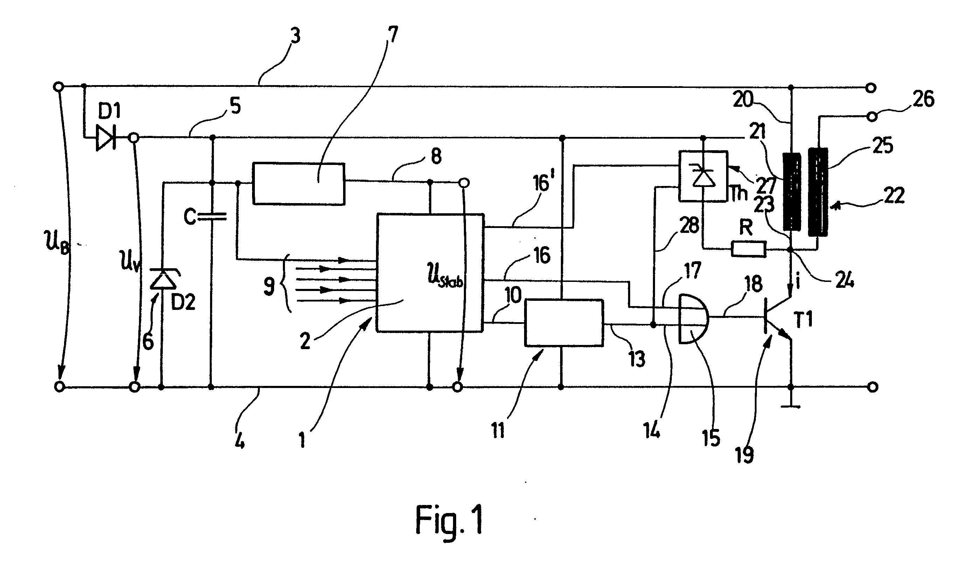

Die Figur 1 zeigt eine Schaltungsanordnung zur Erhöhung der Versorgungsspannung $U_V$ eines Steuergerätes 1, von dem - der Übersichtlichkeit halber - nur ein Teil, nämlich ein Rechner 2 dargestellt ist.

Die auf der Leitung 3 gegenüber dem Chassis (Leitung 4) eines Kraftfahrzeuges anliegende Batteriespannung $U_B$ ist über eine Verpolschutzdiode $D_1$ an eine die Versorgungsspannungsebene bildende Leitung 5 angeschlossen. Die Leitung 5 führt zu einer Zenerdiode $D_2$, deren anderer Anschluß an die Leitung 4 angeschlossen ist. Die Zenerdiode $D_2$ bildet demgemäß einen Überspannungsableiter 6 für die Versorgungsspannungsebene. Parallel zur Diode $D_2$ liegt ein Ladekondensator C. Die Leitung 5 führt ferner zu einer Spannungsstabilisierungs-Schaltung 7, deren Ausgang 8 an den Rechner 2 angeschlossen ist. Am Ausgang 8 wird eine stabilisierte Spannung $U_{stab}$ zur Verfügung gestellt. Der Rechner 2 weist mehrere Eingänge 9 auf, von denen einer mit der Leitung 5 verbunden ist.

Ein Ausgang 10 des Rechners 2 führt zu einem Oszillator 11, der vorzugsweise als Rechteckspannungsoszillator ausgebildet ist. Er ist für seinen Betrieb an die Versorgungsspannungsebene angeschlossen. Der Ausgang 13 des Oszillators 11 ist mit einem ersten Eingang 14 eines ODER-Gliedes 15 verbunden. Ein weiterer Ausgang 16 des Rechners 2 führt zu einem zweiten Eingang 17 des ODER-Gliedes 15. Der Ausgang 18 des ODER-Gliedes 15 führt zu einem Unterbrecher 19, der als Transistor T1 ausgebildet ist. Konkret ist dabei so vorgegangen, daß die Basis des Transitors T1 mit dem Ausgang 18 in Verbindung steht.

An die die Batteriespannung $U_B$ führende Leitung 3 ist das eine Ende 20 der Primärwicklung 21 einer Zündspule 22 angeschlossen, während das andere Ende 23 der Primärwicklung 21 zu einem Verbindungspunkt 24 führt. Die Sekundärwicklung 25 der Zündspule 22 ist mit einem Wicklungsende an den Verbindungspunkt 24 angeschlossen und das andere Wicklungsende führt zu einem Anschluß 26, der zum Verteiler der Brennkraftmaschine des Kraftfahrzeugs führt. Der Verbindungspunkt 24 steht über die Kollektor-Emitter-Strecke des Transistors T1 mit dem Chassis (Leitung 4) in Verbindung.

Ferner ist ein als Thyristor Th ausgebildetes Schaltglied 27 vorgesehen, dessen Kathode an der Leitung 5 und dessen Anode über einen Widerstand R an den Verbindungspunkt 24 angeschlossen ist. Das Gate des Thyristors Th steht über eine nicht näher dargestellte Ansteuerschaltung und eine Leitung 28 mit dem Ausgang 13 des Oszilators 11 in Verbindung. Ferner sind Rechner 2 und Ansteuerschaltung über eine Leitung 16' miteinander verbunden. Die Verpolschutzdiode D1 ist so geschaltet, daß ihre Anode an der Batteriespannung $U_B$ und ihre Kathode an der Versorgungsspannung $U_V$ liegt. Die Zenerdiode $D_2$ ist im Hinblick auf die Versorgungsspannung $U_V$ in Sperrichtung geschaltet.

Die Schaltungsanordnung arbeitet folgendermaßen:

Es wird davon ausgegangen, daß der Energieinhalt (Ladezustand) der Batterie des Kraftfahrzeuges, bei spielsweise durch kalte Witterung oder Lebensalter, niedrig ist. Demzufolge wird die Batteriespannung $U_B$ bei einem Startversuch der Brennkraftmaschine des Kraftfahrzeuges auf einen relativ niedrigen Wert durch den hohen Stromverbrauch der Andrehvorrichtung absinken. Auf der Versorgungsspannungebene (Leitung 5) steht dann nur noch eine relativ kleine Versorgungsspannung $U_V$ zur Verfügung, die noch um die Durchlaßspannung (ca. 0,7 Volt) der Verpolschutzdiode $D_1$ erniedrigt ist. Der Kondensator C kann sich demgemäß nur auf dieses niedrige Niveau aufladen, welches ferner über einen der Eingänge 9 an dem Rechner 2 und auch an dem Eingang der Spannungsstabilisierungs-Schaltung 7 anliegt. Es sei daher ferner davon ausgegangen, daß am Ausgang 8 der Spannungsstabilisierungs-Schaltung 7 nicht die zum Betreiben des Rechners 2 erforderliche Mindestspannung von z.B. 5V abgegeben werden kann. Demzufolge wird der Rechner 2 nicht arbeiten, das heißt, er wird keine Ausgangsdaten liefern, die unter anderem die Zündfunkenabgabe steuern. Die Spannungsüberwachung nimmt der Rechner 2 über eine an den Eingang 9 angeschlossene, nicht dargestellte, spannungsabhängige Logik-Schaltung vor. Insbesondere kann vorgesehen sein, daß dieser ein Analog/Digital-Konverter vorgeschaltet ist. Über die weiteren Eingänge 9 können noch andere, hier nicht weiter interessierende Überwachungen erfolgen. Sofern die Versorgungsspannung $U_V$ beim Andrehvorgang einen bestimmten Wert nicht unterschreitet, schwingt der Oszillator 11 an, der an seinem Ausgang 13 eine Rechteckspannung erzeugt. Die Rechteckspannung liegt am ODER-Glied 15 und über die Leitung 28 auch an der Ansteuerschaltung des Thyristors Th an. Hierdurch wird im Rhythmus der Rechteckspannung über das ODER- Gliedes 15 der Transistor T1 angesteuert. Gleichzeitig erfolgt über die Leitung 28 und die Ansteuerschaltung eine Ansteuerung des Thyristors Th, so daß dieser bei entsprechendem Potential an Anode und Kathode seinen leitenden Zustand annimmt. Das Durchsteuern des Thyristors Th hat ferner zur Folge, daß der Strom i, der durch die Primärwicklung 21 der Zündspule 22 fließt, derart klein ist, daß ein Untererregungszustand vorliegt, das heißt, ein Zündfunke tritt nicht auf.

Immer dann, wenn die Oszillatorspannung auf 0 zurückspringt, wird der Transistor T1 in seinen Sperrzustand versetzt, so daß die in der Induktivität der Primärwicklung 21 gespeicherte Energie über den Widerstand R und dem sich im leitenden Zustand befindlichen Thyristor Th der Versorgungsspannungsebene (Leitung 5) zugeführt wird, was zu einer Erhöhung der Versorgungsspannung $U_V$ führt. Diese Spannungserhöhung ermöglicht die Bereitstellung einer ausreichenden Betriebsspannung für den Rechner 2 am Ausgang 8 der Spannungsstabilisierungs-Schaltung 7. Der Rechner 2 kann demgemäß seine Steuerungs- und Überwachungsfunktion übernehmen.

Stellt der Rechner 2 fest, daß alle Voraussetzungen für die Abgabe eines Zündfunkens vorliegen, so wird die Funktion des Oszillators 11 durch einen Impuls am Ausgang 10 unterbrochen. Über ein Signal auf der Leitung 16' ist überdies sichergestellt, daß sich der Thyristor Th in einem gesperrten Zustand befindet. An seinem Ausgang 16 gibt der Rechner 2 einen Zünd-Steuerimpuls ab, der über das ODER-Glied 15 den Tran sistor T1 derart durchsteuert, daß die Zündspule 22 voll erregt und ein Zündfunke abgegeben wird.

Sofern dieses zum Anspringen der Brennkraftmaschine führt, übernimmt der Rechner 2 über die Leitung 16 die weitere Zünd-Steuerung des Transistors T1. Muß der Andrehvorgang wiederholt werden, so wird der beschriebene Ablauf wiederholt.

Die Frequenz des Oszillators 11 ist hinreichend groß gewählt, so daß der Spannungsripple auf der Versorgungsspannungsebene klein bleibt.

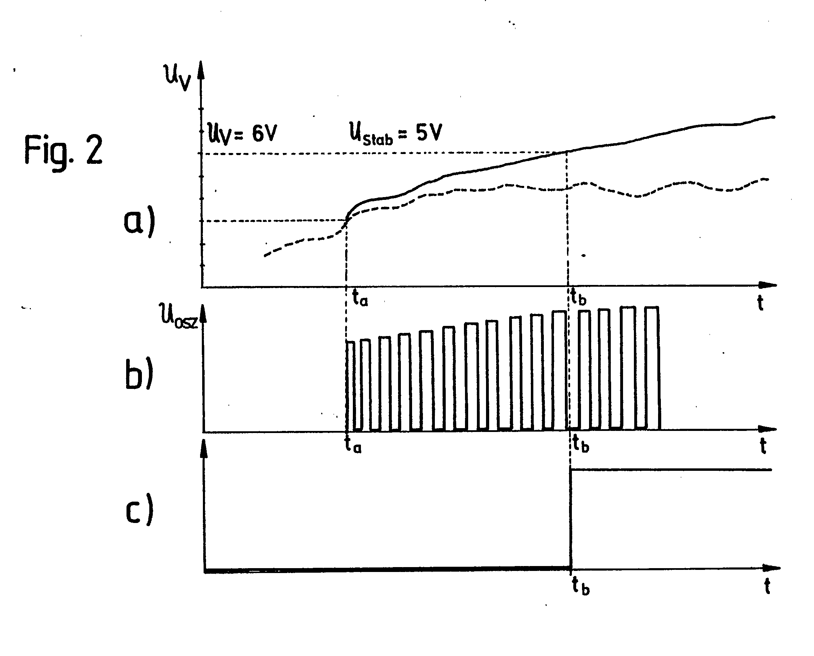

Die zuvor beschriebene Arbeitsweise wird anhand der Figur 2a bis c nochmals verdeutlicht. Die Figur 2a zeigt den zeitlichen Verlauf der Versorgungsspannung $U_V$, und zwar ist als gestrichelte Linie der Spannungsverlauf ohne die erfindungsgemäße Spannungserhöhung dargestellt. Die durchgezogene Linie zeigt den zeitlichen Verlauf der Versorgungsspannung $U_V$ bei Anwendung der erfindungsgemäßen Lehre. Zum Zeitpunkt $t_a$ weist die Versorgungsspannung $U_V$ eine Größe auf, die für ein Anschwingen des Oszillators 11 ausreicht. Aus der Figur 2b ist ein dementsprechender Verlauf der Oszillatorspannung $U_{Osz}$ ersichtlich. Über die Leitung 28 wird die Ansteuerschaltung derart angesteuert, daß der Thyristor Th seinen leitenden Zustand einnimmt. Die Oszillatorspannung $U_{Osz}$ schaltet ferner den Transistor T1 laufend ein und aus, so daß es zu der bereits beschriebenen Spannungserhöhung kommt. Diese Spannungserhöhung ist aus der Figur 2a ersichtlich. Zum Zeitpunkt $t_b$ hat die Versorgungsspannung $U_V$ eine Größe erreicht, die ausreicht, um dem Rechner 2 eine hinreichend große Betriebsspannung zur Verfügung zu stellen. In der Figur 2a ist angedeutet, daß die Versorgungsspannung $U_V$ zum Zeitpunkt $t_b$ den Wert von 6V annimmt. Hierdurch ist die Spannungsstabilisierungs-Schaltung 7 in der Lage, am Ausgang 8 eine stabilisierte Spannung $U_{stab}$ von 5V zur Verfügung zu stellen. Die 5V reichen für den Betrieb des Rechners 2 aus. Dieser nimmt ab dem Zeitpunkt $t_b$ seinen Betrieb auf. Dieses ist in der Figur 2c durch die dort wiedergegebene Sprungfunktion dargestellt.

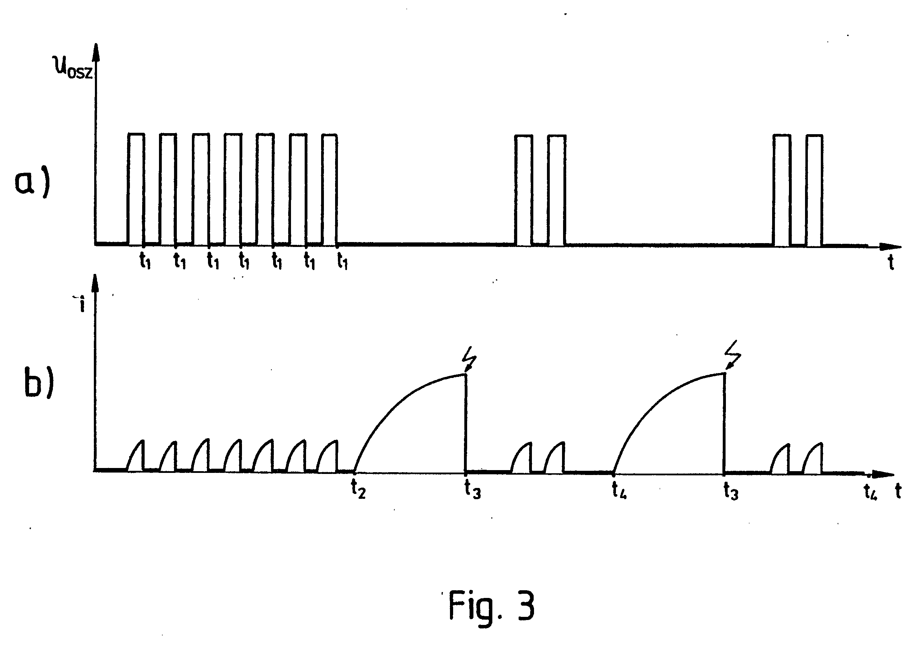

Nach einem weiteren Ausführungsbeispiel der Erfindung ist vorgesehen, daß eine Versorgungsspannungserhöhung auch während des Zündbetriebes der Zündspule erfolgen kann. Die Figuren 3a und b zeigen den zeitlichen Verlauf der Oszillatorspannung $U_{Osz}$, sowie den zugehörigen Strom i der Primärwicklung 21. Die Zeitpunkte $t_1$ kennzeichnen das Zurückgehen der Oszillatorspannung $U_{Osz}$ auf "O". Liegen entsprechende Voraussetzungen vor, so wird ein Zündfunke abgegeben (Zeitpunkt $t_2$ in Figur 3b). Innerhalb des Zeitraumes zwischen den einzelnen Zündfunken (Zeitraum $t_3$ bis $t_4$ in Figur 3b) wird der Transistor T1 und der Thyristor Th entsprechend angesteuert (z. B. jeweils 2 mal), so daß die in der Primärwicklung 21 der Zündspule 22 gespeicherte Energie der Versorgungsspannungsebene zugeführt wird. Gegenüber dem ersten Ausführungsbeispiel erfordert die Funktion des zweiten Ausführungsbeispiels lediglich eine etwas kompliziertere Steuerung, die doch ohne weiteres durch entsprechende Datenausgabe aus den Ausgängen 10,16 und 16' des Rechners 2 vorgenommen werden kann.

**Ansprüche**

1. Schaltungsanordnung zur Erhöhung der Versorgungsspannung für während der Anlaß- oder Betriebsphase einer Brennkraftmaschine eines Kraftfahrzeuges oder dergleichen zu betreibende Geräte, insbesondere Steuergeräte für Zünd- und/oder Einspritzanlagen, mit einer zwischen der Versorgungsspannung und der Batteriespannung liegenden Verpolschutzdiode, **dadurch gekennzeichnet,** daß ein steuerbares Schaltglied (27) zwischen einer Induktivität, die auch als Zündspule (22) des Kraftfahrzeuges dient, und der Versorgungsspannung ($U_V$) angeordnet ist, und daß ein gleichfalls auch der Erzeugung von Zündfunken dienender Unterbrecher (19) zeitversetzt zum Schaltglied (27) derart angesteuert wird, daß die Zündspule (22) einen für die Erzeugung von Zündfunken nicht ausreichenden Untererregungszustand annimmt.

2. Schaltungsanordnung nach Anspruch 1, **dadurch gekennzeichnet,** daß die Primärwicklung (21) der Zündspule (22) mit ihrem einen Ende (20) an einem Pol der Batteriespannung ($U_B$) und mit ihrem anderen Ende (23) an einem am Unterbrecher (19) angeschlossenen Verbindungspunkt (24) liegt und daß das Schaltglied (27) zwischen dem Verbindungspunkt (24) und der Versorgungsspannung ($U_V$) angeordnet ist.

3. Schaltungsanordnung nach einem der vorhergehenden Ansprüche, **dadurch gekennzeichnet,** daß in Reihe zum Schaltglied (27) ein Widerstand (R) und/oder eine Induktivität liegt.

4. Schaltungsanordnung nach einem der vorhergehenden Ansprüche, **dadurch gekennzeichnet,** daß der Steueranschluß des Schaltgliedes (27) von einem Oszillator (11) angesteuert ist, der auch den Unterbrecher (19) ansteuert.

5. Schaltungsanordnung nach einem der vorhergehenden Ansprüche,**dadurch gekennzeichnet,** daß der Oszillator (11) ein Rechteckspannungsoszillator (12) ist.

6. Schaltungsanordnung nach einem der vorhergehenden Ansprüche, **dadurch gekennzeichnet,** daß die Taktfrequenz des Oszillators (11) derart hoch ist, daß die Zündspule (22) den Untererregungszustand annimmt.

7. Schaltungsanordnung nach einem der vorhergehenden Ansprüche, **dadurch gekennzeichnet,** daß der Ausgang (13) des Oszillators (11) zu einer Ansteuerschaltung des Schaltgliedes (27) und zu einem ersten Eingang (14) eines ODER-Gliedes (15) führt, dessen anderer, zweiter Eingang (17) mit dem Steuergerät (1) verbunden ist und dessen Ausgang (18) den Unterbrecher (19) ansteuert.

8. Schaltungsanordnung nach einem der vorhergehenden Ansprüche, **dadurch gekennzeichnet,** daß die Wahl der Ansteuerung des Unterbrechers (19) durch das Steuergerät (1) oder den Oszillator (11) von eine spannungsabhängigen Logik-Schaltung vorgenommen wird.

9. Schaltungsanordnung nach einem der vorhergehenden Ansprüche, **dadurch gekennzeichnet,** daß an die Versorgungsspannung ($U_V$) ein Überspannungsableiter angeschlossen ist.

10. Schaltungsanordnung nach einem der vorhergehenden Ansprüche, **dadurch gekennzeichnet,** daß der Überspannungsableiter (6) eine Zenerdiode ($D_2$) ist.

11. Schaltungsanordnung nach einem der vorhergehenden Ansprüche, **dadurch gekennzeichnet,** daß die Versorgungsspanung ($U_V$) an einem Ladekondensator (C) liegt.

12. Schaltungsanordnung nach einem der vorhergehenden Ansprüche, **dadurch gekennzeichnet,** daß das Steuergerät (1) einen Rechner (2) aufweist, der den Oszillator (11), das ODER-Glied (15) und die Ansteuerschaltung des Schaltgliedes (27) ansteuert.

13. Schaltungsanordnung nach einem der vorhergehenden Ansprüche, **dadurch gekennzeichnet,**daß der Rechner (2) über einen Analog/Digital-Konverter mit der Versorgungsspannung ($U_V$) verbunden ist.

14. Schaltungsanordnung nach einem der vor-

hergehenden Ansprüche, **dadurch gekennzeich-net,** daß während der Spannungserhöhungsphase Schaltglied (27) und Unterbrecher (19) jeweils zueinander entgegengesetzt in ihren leitenden bzw. sperrenden Zustand geschaltet werden.

15. Schaltungsanordnung nach einem der vor-hergehenden Ansprüche, **dadurch gekennzeich-net,** daß das Schaltglied (27) während der Span-nungserhöhungsphase einen leitenden Zustand an-nimmt.

16. Schaltungsanordnung nach einem der vor-hergehenden Ansprüche, **dadurch gekennzeich-net,** daß während des Zündbetriebes der Zündspule (22) in den Zeiträumen zwischen den einzelnen Zündfunken eine Erhöhung der Versorgungsspannung (U$_V$) vorgenommen wird.

17. Schaltungsanordnung nach einem der vor-hergehenden Ansprüche, ·**dadurch gekennzeich-net,** daß das Schaltglied (27) ein Thyristor (Th) ist.

18. Schaltungsanordnung nach einem der vor-hergehenden Ansprüche, **dadurch gekennzeich-net,** daß das Schaltglied ein elektronischer Schalter mit optischer Triggerung ist.

19. Schaltungsanordnung nach einem der vor-hergehenden Ansprüche, **dadurch gekennzeich-net,**daß der Unterbrecher (19) ein Transistor (T1) ist.

20. Schaltungsanordnung nach einem der vor-hergehenden Ansprüche, **dadurch gekennzeich-net,,** daß der Oszillator (11) zur Versorgung an die Versorgungsspannung (U$_V$) angeschlossen ist.

21. Schaltungsanordnung nach einem der vor-hergehenden Ansprüche, **dadurch gekennzeich-net,** daß der Oszillator (11) unabhängig vom Rechner (2) anschwingt und durch den Rechner (2) ausschaltbar ist.

22. Schaltungsanordnung nach einem der vor-hergehenden Ansprüche, **dadurch gekennzeich-net,** daß der Oszillator (11) in CMOS-Technologie ausgeführt ist.

23. Schaltungsanordnung nach einem der vor-hergehenden Ansprüche, **dadurch gekennzeich-net,** daß der Oszillator (11) bei einer Versorgungsspannung (U$_V$) anschwingt, die kleiner ist als die Mindestspannung für den Betrieb des Rechners (2).

Fig.1

Fig. 2

a)

$U_V$

$U_V = 6V$   $U_{Stab} = 5V$

$t_a$   $t_b$   t

b)

$U_{osz}$

$t_a$   $t_b$   t

c)

$t_b$   t

Fig. 3

EP 0 391 065 A2